# EUROPEAN PATENT APPLICATION

(11) **EP 1 447 137 A1**
(43) Date of publication of application: **18.08.2004**
(21) Application number: 03002646.2
(22) Date of filing: 11.02.2003
(51) Int. Cl.: B02C 13/14, B02C 13/16, B02C 23/14, B02C 23/30

(54) **A method of milling materials and an apparatus for carrying out this method**

(71) Applicant: Omanik, Stefan, Ing., 18600 Praha 8 (CZ)
(72) Inventor: Omanik, Stefan, 18600 Praha 8 (CZ); Horcicka, Vaclav, 28922 Lysa nad Labem (CZ)
(74) Representative: Pelikanova, Ivana

(57) **Abstract**

A method of milling materials, where the material is exposed to simultaneous effect of mechanical impacts produced by rotating chain (5) links, air turbulence and pressure air surges that come into existence in the processing chamber (8) at the circumferential velocity of the free chain (5) ends in the region of sonic speed. Apparatus for milling of materials is formed by a body (6) rotatably arranged in an at least partially closed processing chamber (8) comprising further an input of the processed material and a device for withdrawal of milled substances. At least one chain (5) is attached by one of its ends to the body (6), wherein, wherein, the free end of the chain (5) exceeds the edge of the body (6). The body (6) is comprised of a steel carrying plate (3) and a pressure plate (4), the plates (3,4) being connected together with a gap between them by means of bolts (7) arranged evenly around their circumferences, wherein, the end links of said steel chains (5) are put on the bolt (7) shanks, wherein, in its axis the body (6) is firmly connected to the end of the vertically arranged shaft (2) by its carrying plate (3).

## Description

### Field of the Invention

The present invention relates to a method of milling materials and an apparatus for carrying out this method, for example of dewatered organic sludge produced in sewage clarification plants or in industrial and agricultural productions, recycled materials, so as plastics, tyres, glass, plasterboards, eventually for milling of cereals.

### Background of the Invention

At present, disintegration of materials is carried out by the techniques of crushing, milling or rolling in equipment based on various mechanical and physical principles. Crushing mills, drum mills, friction mills, roll mills having milling elements in the shape of rolls or balls, or cone crushers have been disclosed. Such equipment is complex in design and production and usually it is determined to be used for certain given purpose only. Disintegration by cutting or tearing elements that cut the material to pieces is again dedicated more or less to a single purpose and serves particularly for processing of organic materials. In disintegration, the auxiliary physical effects are also used, for example the ultrasonic technique, irradiation. A common disadvantage of the prior art methods and equipment for material disintegration is that they cannot be used for a broader range of processed materials; they have higher energy demands to obtain the final product; they are complex in design and have higher investment costs.

### Summary of the Invention

The disadvantages of the prior art are substantially removed by a method of milling materials and an apparatus for carrying out this method according to this invention where the apparatus for milling of materials is formed by a body rotatably arranged in an at least partially closed processing chamber comprising further an input of the processed material and a device for withdrawal of milled substances. The subject matter of this invention consists in that at least one chain is attached by one of its ends to the body. The free end of the chain exceeds the edge of this body. The chains are preferably attached in an odd number of chains to a body of circular shape, evenly around the circumferential edge of the body. By simple means, powdered consistency of the milled material is obtained in dry conditions. The grain size is up to 200 µm. It is so without any regard to the property of the processed material, whether it is rock, glass; rubber tyres, plastics, cereal grains, recycled waste or sludge, which can be further classified in dry state. In this case, a substantial decrease of energy consumption is reached in comparison to the conventional methods of milling and processing. In case of some materials, separation up to the basic components is possible, so that for example after having been milled according to this invention plasterboard can be separated to plaster and paper, tyres to rubber and textile or metal fabric. Advantageous is the milling of cereals, which cereals contain both the material of grains and the hulls after having been milled and so it is fully used for nourishment.

The chains are usually of steel, wherein, at least some of the chain links are provided with plane wings. In an alternative embodiment at least one of the chain links is formed by two eyes, wherein, the eyes are firmly connected by means of a plane wing. The wings increase air turbulence in the immediate vicinity of the chains rotating with high circumferential velocity and so they improve the effects of the material disintegration.

The body is comprised of a steel carrying plate and a pressure plate, wherein, the plates are connected together with a gap between them by means of bolts arranged evenly around their circumferences, wherein, the end links of the steel chains are put on the bolt shanks, wherein, in its axis the body is firmly connected to the end of a vertically arranged shaft by its carrying plate. The body is very simple in design and to produce. In its operation the maintenance consists only in rapid and uncomplicated chains replacement.

The processing chamber is formed by a cylindrical body firmly closed by a plate on top, which plate is provided with an opening for input of the processed material and eventually also with an opening for withdrawal of the, milled substances, wherein, the circumferential mantle of the cylindrical body is provided with an abrasion resistant lining and the processing chamber is closed by a removable top lid or by removable bottom through which a vertical shaft is passing into the processing chamber so that the body with chains is mounted on it in the bottom part of this processing chamber. Arrangement of the removable top lid or the bottom allows an easy replacement of the worn out body chains. Because in disintegration of material by its contact with the rapidly rotating chains the material hits the circumferential mantle, the mantle is lined with abrasion resistant metallic or ceramic segments.

The device for withdrawal of milled substances comprises a withdrawal pipeline, which pipeline interconnects the processing chamber with a cyclone terminated by an output feeder of milled substances. The milled substances in powdery consistency with grain size up to 200 µm are sucked off the processing chamber into the cyclone where they are separated from air and gathered in the output feeder.

The nominal inside diameters of the withdrawal pipeline and of the opening in the processing chamber for withdrawal of the milled substances are the same. This is a preferable embodiment decreasing the depositing of the sucked off milled substance in the output pipeline, eventually in the region of its connection to the processing chamber. Preferably, the withdrawal pipeline can be connected to the cyclone body tangentially.

The method of milling material according to this invention comprises in that the material is exposed to simultaneous effect of mechanical impacts produced by rotating chain links, air turbulence and pressure air surges that come into existence in the processing chamber at the circumferential velocity of the free chain ends in the region of sonic speed.

### Brief Description of the Drawings

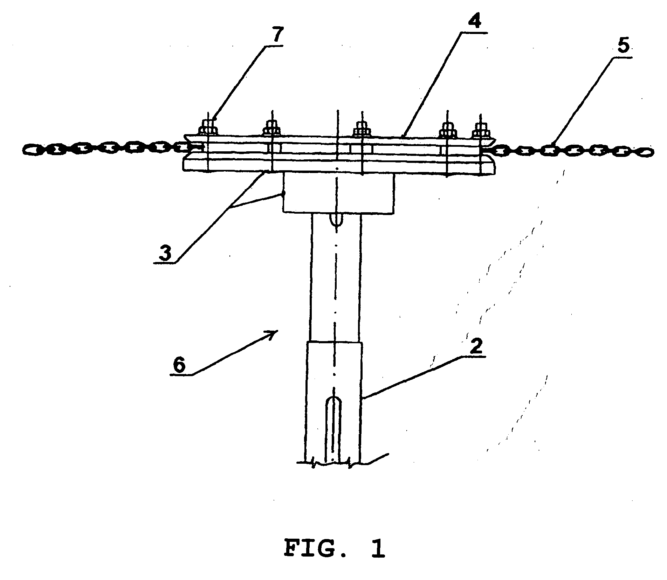

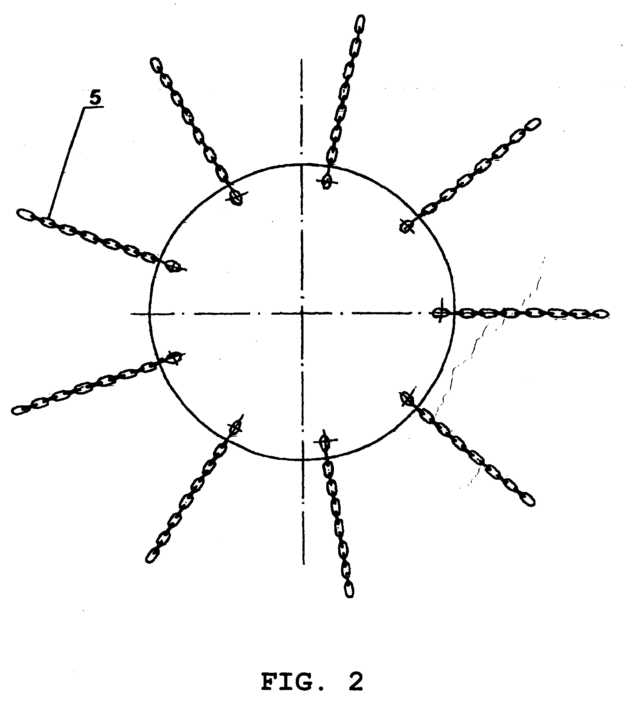

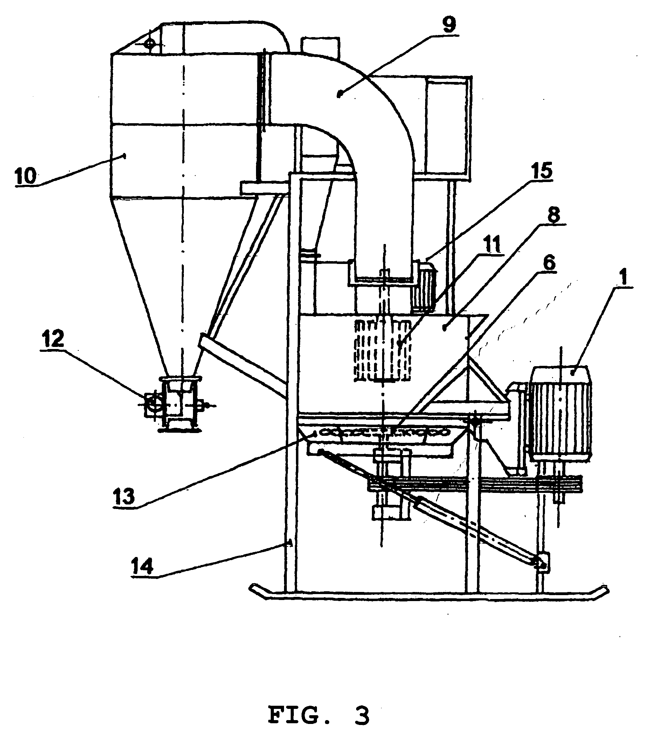

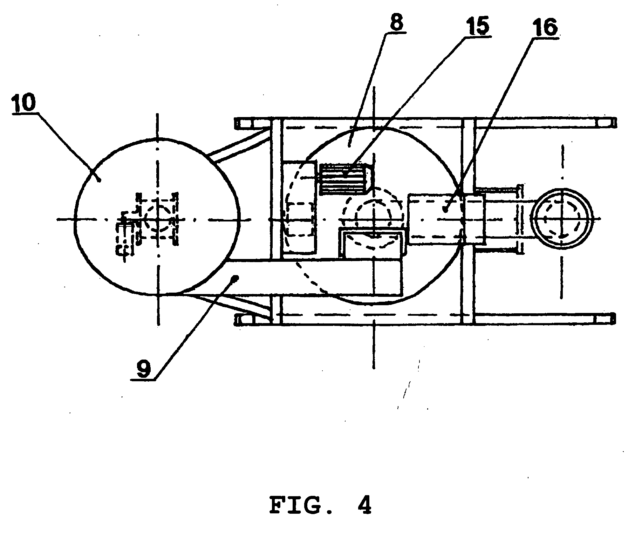

The invention will now be described with reference to drawings and the subsequent description of examples of its embodiments. Fig. 1 and 2 show a schematic side view and a schematic plan view respectively of an example of an apparatus for milling of materials, which apparatus is formed by a body made of a steel carrying plate and a steel pressure plate. Both plates are interconnected with a gap between them by means of bolts arranged evenly around their circumferences. The end steel chain links are put on bolt shanks. In its axis, the body is firmly connected to the end of a vertically arranged shaft by the steel carrying plate. Fig. 3 and 4 show a side view and a plan view respectively of an apparatus according to Fig. 1 and 2, arranged in the bottom part of a processing chamber, which processing chamber is on a frame and provided with an input of the processed material and with a device for withdrawal of milled substances in its upper part.

### Detailed Description of the Invention

An apparatus for milling of materials is formed by a body 6 consisting of a steel carrying plate 3 and a pressure plate 4. Both plates 3 and 4 are interconnected having a gap between them by means of bolts 7, which bolts 7 are arranged evenly around their circumferences. The end links of the steel chain 5 are put on the bolt 7 shanks. Their opposite ends are free. In its axis, the body 6 is firmly connected by its carrying plate 3 by means of a clip to the end of a vertically arranged shaft 2 on which shaft 2 is a pulley of a belt transmission, which transmission is driven by an electric drive 1 (electric motor). Fig. 2 shows in plan view this apparatus having nine steel chains 5. In this specific embodiment the plates 3, 4 have diameter 45 cm. In rotation, the chains 5 (their individual links have thickeness 12 mm) form an envelope having external diameter 120 cm.

The body 6 is rotatably arranged in the processing chamber 8. The processing chamber 8 is firmly mounted on a rigid frame 14. The processing chamber 8 is formed by a cylindrical body. From above, the cylindrical body is firmly closed by a plate. The plate is provided with an opening for input of the processed material and with a device for withdrawal of the milled substances. The circumferential mantle of the cylindrical body is provided with a replaceable abrasion resistant metallic or ceramic lining. On the bottom side, the processing chamber 8 is closed by a hydraulically controlled removable bottom 13. A vertical shaft 2 passes through the bottom 13 into the processing chamber 8. The body 6 with chains 5 mounted on the shaft 2 is arranged in the bottom part of this processing chamber 8 (Fig. 3). This arrangement allows, after releasing the mechanical safety locks, to take the whole bottom 13 assembly off the processing chamber 8. This allows access for cleaning, eventually repairs of the inner parts of the processing chamber 8. In this embodiment, the bearings of the shaft 2 of the body 6 are placed on a common structure of the bottom 13, as well as the motor of the drive 1 of the shaft 2 of the body 6.

Above, the processing chamber 8 is closed by a top plate provided with an opening for input of the processed material and a device for withdrawal of the milled substances. From an input feeder 16, for example from a conventional screw conveyor in combination with a paddle belt conveyor, the input material is conveyed into the processing chamber 8 through an opening in its top plate. In Fig. 3 and 4 this input is shown in the peripheral part of the top plate, however, preferably it can be in the central region of the top plate. Alternatively, instead of the removable bottom 13 the processing chamber 8 can be provided with a removable top lid (plate) having in its central region an opening for input of processed material.

The device for withdrawal of the milled substances from the processing chamber 8 comprises a withdrawal pipeline 9 (with a fan 15) interconnecting the processing chamber 8 with a cyclone 10 terminated by an output feeder 12 of the milled substances. The structure of the output feeder 12 can be similar as that of the input feeder 16. The required level of milled material in the cyclone 10 is maintained by controlling the rotation speed of the output feeder 12 using for example a frequency converter.

The milled material can be conveyed from the output feeder 12 into packages or into the subsequent processing stage, for example into a pneumatic transport pipeline. The withdrawal pipeline 9 can be connected to the processing chamber 8, preferably to its circumferential wall. In this case it is also possible to leave out the fan entirely.

In the processing chamber 8 at the input into the withdrawal pipeline 9 can be (if the withdrawal pipeline 9 is connected to an opening in the top lid of the processing chamber 8) a separating apparatus 11 formed by a rotatably arranged cylindrical lamellar basket. The lamellar basket is formed by vertical stainless steel lamellas 3 x 20 mm spaced about 5 mm from each other and directing to the basket vertical axis. The lamellas serve to trap larger particles that are thrown back into the processing space of the processing chamber 8 due to the influence of basket rotation and air turbulence. Fig. 3 and 4 show the separating apparatus 11 situated in the axis of the processing chamber 8. However, the separating equipment 11 can be preferably situated also in the border part of the top plate of the body of this chamber. Preferably, the inner diameters of the withdrawal pipeline 9, the lamellar basket and the opening in the plate of the processing chamber 8 (eventually in its circumferential wall) for withdrawal of the milled substances are the same. Then clogging with this substance of powdery consistency does not take place. A preferable embodiment is also such embodiment where the withdrawal pipeline 9 is attached to the cyclone 10 tangentially. This increases effectiveness of the separation of the powdery milled substance from air.

The bearing frame 14 of the whole apparatus is welded from steel sections and can be placed on coulisses that allow its movement on firm underlayment. In the working position it does not need to be anchored in the underlayment. A firm fixing of the frame 14 with the processing chamber 8 provides sufficient equipment rigidity.

The method of milling materials according to this invention is based on the principle that the material is exposed to simultaneous effect of mechanical impacts of links of rotating chains 5, air turbulence and pressure air surges arising in the processing chamber 8 at circumferential speed of free chain 5 ends in the region of sonic speed. The pressure air surges multiply the effect of destructing the milled material. To increase the air turbulence around the chains 5 rotating at high speed, at least some of the chain 5 links can be provided with welded or pressed plane wings, eventually some of the chain 5 links can be formed by two eyes firmly connected by means of a plane wing.

This invention if used decreases energy consumption in the process of treatment, the apparatus is simple in design and its maintenance is easy. It can be universally used what has a number of other advantages. For example, in milling or crushing of rock and metal oxides to a powdered substance with grain size up to 200 µm, the subsequent classifying by a dry method can easily separate the metal grains. In recycling of plasterboard waste this material can be easily separated to plaster and paper when it has been milled to a powdery substance. In case of tyres they can be separated to rubber and textile or metallic fabric, in case of glass or plastics the final substance can be reused as starting raw material. Advantageous is also its use in the food industry. In milling of cereals the raw material is completely used for nourishment, both the grains and the fibres from the husks.

### Industrial Use

The invention can be used for milling or disintegrating of materials of substantially all kinds, for example of rock containing metals, dewatered organic sludge from sewage clarification plants and industrial and agricultural production, recycled materials so as plastics, tyres, glass, plasterboards or eventually for milling of cereals.

### List of reference signs

- 1: shaft drive
- 2: shaft
- 3: carrying plate with a clip
- 4: pressure plate
- 5: chain
- 6: body
- 7: bolt
- 8: processing chamber
- 9: withdrawal pipeline
- 10: cyclone
- 11: separating apparatus
- 12: output feeder
- 13: removable bottom
- 14: steel frame
- 15: fan
- 16: input feeder

## Claims

1. A method of milling materials, **characterised in that** the material is exposed to simultaneous effect of mechanical impacts produced by rotating chain (5) links, air turbulence and pressure air surges that come into existence in the processing chamber (8) at the circumferential velocity of the free chain (5) ends in the region of sonic speed.

2. Apparatus for milling of materials formed by a body (6) rotatably arranged in an at least partially closed processing chamber (8) comprising further an input of the processed material and a device for withdrawal of milled substances **characterised in that** at least one chain (5) is attached by one of its ends to said body (6), wherein, the free end of said chain (5) exceeds the edge of said body (6).

3. Apparatus according to Claim 2 **characterised in that** said chains (5) are preferably attached in an odd number of chains (5) to a body (6) of circular shape, evenly around the circumferential edge of said body (6).

4. Apparatus according to Claim 2 or 3 **characterised in that** said chains (5) are of steel, wherein, at least some of the chain (5) links are provided with plane wings.

5. Apparatus according to Claims 2 to 4 **characterised in that** said chains (5) are of steel, wherein, at least one of said chain (5) links is formed by two eyes, wherein, said eyes are firmly connected by means of a plane wing.

6. Apparatus according to Claims 2 to 5 **characterised in that** said body (6) is comprised of a steel carrying plate (3) and a pressure plate (4), the plates (3,4) being connected together with a gap between them by means of bolts (7) arranged evenly around their circumferences, wherein, the end links of said steel chains (5) are put on the bolt (7) shanks, wherein, in its axis the body (6) is firmly connected to the end of the vertically arranged shaft (2) by its carrying plate (3).

7. Apparatus according to Claims 2 to 6 **characterised in that** said processing chamber (8) is formed by a cylindrical body closed by a plate on top, which plate is provided with an opening for input of the processed material and with an opening for withdrawal of the milled substances, wherein, the circumferential mantle of the cylindrical body is provided with an abrasion resistant lining and the processing chamber (8) is closed by a removable top lid or by removable bottom (13) through which a vertical shaft (2) is passing into said processing chamber (8) so that said body (6) with chains (5) mounted on it is situated in the bottom part of this processing chamber (8).

8. Apparatus according to Claim 7 **characterised in that** said device for withdrawal of milled substances comprises a withdrawal pipeline (9) interconnecting said processing chamber (8) with a cyclone (10) terminated by an output feeder (12) of milled substances.

9. Apparatus according to Claim 8 **characterised in that** the nominal inside diameters of the withdrawal pipeline (9) and of the opening in the processing chamber (8) for withdrawal of the milled substances are the same.

## Amended claims

### Amended claims in accordance with Rule 86(2) EPC.

1. A method of milling materials using mechanical impacts of chain links (5) rotating in a processing chamber (8), **characterized in that** the material is exposed to simultaneous effect of impacts caused by chain links (5), air turbulence and surges of air caused by free chain ends rotating by a circumferential speed situated in the region of sonic speed.

2. An apparatus for executing the method according to claim 1, **characterized in that** the apparatus includes a withdrawal pipeline (9) having the same nominal inside diameter as an opening in the wall of the processing chamber (8), the opening being designed for the withdrawal of the milled material.

3. The apparatus according to claim 2, **characterized in that** the processing chamber (8) is formed by a cylindrical body, the circumferential jacket of which is provided by an abrasion resistant lining.
